# EUROPÄISCHE PATENTSCHRIFT

(11) **EP 3 057 758 B1**
(45) Veröffentlichungstag und Bekanntmachung des Hinweises auf die Patenterteilung: **28.11.2018**
(21) Anmeldenummer: 14793462.4
(22) Anmeldetag: 14.10.2014
(51) Int. Cl.: B29C 45/26, B29L 31/30, B29C 45/14, B29C 45/00, B29L 9/00, B29C 45/27

(54) **FORMGEBENDES WERKZEUG ZUR HERSTELLUNG MULTIPLER OBERFLÄCHENDEKORIERTER VERKLEIDUNGSBAUTEILE**
SHAPING TOOL FOR PRODUCING MULTIPLE SURFACE-DECORATED TRIM COMPONENTS
OUTIL DE FAÇONNAGE PERMETTANT DE PRODUIRE DE MULTIPLES ÉLÉMENTS DE REVÊTEMENT DÉCORÉS EN SURFACE

(30) Priorität: 15.10.2013 DE 202013009085 U
(43) Veröffentlichungstag der Anmeldung: 24.08.2016
(73) Patentinhaber: Gerhardi Kunststofftechnik GmbH, 58511 Lüdenscheid (DE)
(72) Erfinder: KIESLICH, Dirk, 58840 Plettenberg (DE)
(74) Vertreter: Patentanwälte Dörner & Kötter PartG mbB
(86) Internationale Anmeldenummer: PCT/EP2014/072052
(87) Internationale Veröffentlichungsnummer: WO 2015/055677

(56) Entgegenhaltungen:
- EP-A2- 1 308 259
- WO-A1-2008/079367
- WO-A1-2012/084833
- US-A1- 2003 227 109
- "HINTER DER FOLIE", PLASTVERARBEITER, HUETHIG GMBH, HEIDELBERG, DE, Bd. 47, Nr. 8, 1. August 1996 (1996-08-01) , Seiten 18-21, XP000659944, ISSN: 0032-1338
- "NEUER WEG ZUR CHIPKARTE", KUNSTOFFE, CARL HANSER VERLAG, MUNCHEN, DE, Bd. 86, Nr. 11, 1. November 1996 (1996-11-01), Seite 1692, XP000636479, ISSN: 0023-5563

## Beschreibung

In der Automobilindustrie werden verschiedene und unterschiedlich geformte Verkleidungsbauteile zur dekorativen Aufwertung eingesetzt. Es sind dabei vielfältige und variantenreiche Arten der Oberflächen-Dekoration, sog. multiple Oberflächendekorationen, bekannt. Im Exterieur werden meist dekorativ hochwertige Kühlerschutzgitter und Zierrat wie Leisten oder Verblendungen eingesetzt. Im Interieur werden hingegen in Türen und Mittelkonsolen sowie in Armaturenbrettern Zierleisten verbaut, die neben einer hohen Widerstandskraft gegen mechanische Beschädigungen und Medien, wie Handschweiß und Cremes, auch hohen ästhetischen Ansprüchen genügen müssen.

Diese Verkleidungsbauteile werden aus Kosten-, Gestaltungs- und Gewichtsgründen meist ganz aus Kunststoffmaterialien hergestellt oder sind unterteilt in ein Trägerteil und ein Dekorelement, welche dann wiederum aus Kunststoff gefertigt sein können, wobei das Dekorelement auch ein metallisches Bauteil sein kann.

Herkömmliche Oberflächentechnologien solcher oberflächendekorierter Verkleidungsbauteile sind das Fertigen nicht dekorierter Kunststoffoberflächen durch Spritzguss, das Lackieren der Kunststoffoberflächen, das Narben und Ätzen der abzubildenden Werkzeugoberflächen und Abformen dieser durch Kunststoffspritzguss, das Galvanisieren der Kunststoffoberfläche, das Dekorieren im Spritzgießwerkzeug durch IMD (In Mold Dekoration), wobei eine auf eine Trägerfolie aufgedruckte Bedruckung im Spritzgießprozess von einer Trägerfolie abgeformt wird, das Hinterspritzen von bedruckten und teilweise verformten und konturfolgend gestanzten Folieninserts durch die FIM Technologie (Film Insert Molding) sowie das Metallfolienhinterspritzen.

Mit diesen aufgeführten Technologien werden die meisten Kunststoffverkleidungsbauteile nicht nur im automobiltechnischen Bereich oberflächlich dekoriert.

Stand der Technik ist es heute, dass die verschiedensten dekorierten Verkleidungsbauteile von verschiedenen Lieferanten mit verschiedenen Spritzgusswerkzeugen hergestellt werden. Dies erhöht neben den hohen Werkzeuginvestitionen auch den logistischen Aufwand und damit einhergehend vielfältige Abstimmungsarbeiten bei den Lieferanten, was mit hohem Zeit- und Kostenaufwand verbunden ist.

Formgebende Spritzgusswerkzeuge der gattungsgemäßen Art sind bspw. aus der WO 2012/084833 A1, EP 1 308 259 A2, WO 2008/079367 A1 und US 2003/227109 A1 bekannt US 2003/227109 A1 betrifft ein Formverfahren, bei dem unter Druck eine dekorative Folie auf die Oberfläche eines geformten Bauteils mittels eines Beschichtungsmaterials aufgebracht wird. Es umfasst ein Mehrfachwerkzeug zum Kunststoffspritzgießen und ein weiteres austauschbares Mehrfachwerkzeug zur Teildekoration.

Vor diesem Hintergrund liegt der Erfindung die Aufgabe zugrunde, ein variables formgebendes Spritzgusswerkzeug zu entwickeln, mit dem alle gängigen Oberflächendekorationstechnologien darstellbar sind und aus dem multiple oberflächendekorierte Verkleidungsbauteile hergestellt werden können.

Erfindungsgemäß wird diese Aufgabe durch ein formgebendes Werkzeug gemäß Anspruch 1 gelöst, in dem die verschiedensten Spezifikationen der unterschiedlichsten Oberflächentechnologien derart integriert sind, dass daraus multiple oberflächendekorierte Verkleidungsbauteile aus Kunststoff herstellbar sind, wobei die Kavitäteneinsätze im geöffneten und zusammengebauten Werkzeug wechselbar ausgeführt sind und thermisch vom restlichen Werkzeugaufbau entkoppelt sind. Hierfür wurden die Spezifikationen und Richtlinien zur Herstellung eines formgebenden Werkzeuges für folgende Technologien kombiniert:
- Fertigung spritzblanker, also undekorierter, ggf. farblich gefertigter Verkleidungsbauteile
- Fertigung lackierter Verkleidungsbauteile
- Fertigung galvanisierter Verkleidungsbauteile
- Fertigung IMD dekorierter Verkleidungsbauteile
- Fertigung IML/FIM dekorierter Verkleidungsbauteile
- Fertigung mit Metallfolien dekorierter Verkleidungsbauteile.

Dadurch ist es möglich, vielfältige und variantenreiche Arten der Oberflächen-Dekoration an Kunststoff-Bauteilen vorzusehen, ohne hierfür verschiedene Spritzgusswerkzeuge benutzen zu müssen. Vielmehr erfolgt die Herstellung in nur einem Spritzgusswerkzeug, welches in der Lage ist, die vorstehend genannten Technologien zu vereinen. Dadurch sind die Werkzeuginvestitionen wesentlich reduziert. Zudem ist auch der logistische Aufwand deutlich geringer, als bei der aus dem Stand der Technik bekannten Herstellung auf verschiedenen Spritzgusswerkzeugen. Folglich ist der Zeit- und Kostenaufwand reduziert.

Zusätzlich und zur prägnanten Abbildung von unterschiedlichen Oberflächengüten im formgebenden Werkzeug, ist eine thermisch vom Werkzeugaufbau entkoppelte Temperierung der bauteilsichtseitigen Werkzeugkavitäten integriert.

Erfindungsgemäß ist es nun möglich, während der Einspritzphase innerhalb weniger Sekunden auf ein Temperaturniveau oberhalb der Glasübergangstemperatur zu kommen und ebenso in der Abkühlphase auf Entformungstemperatur herunter zu kühlen.

Um größtmögliche Variabilität hinsichtlich der Anbindungspositionen und Anzahl der Anbindungen zu erreichen und um den Spezifikationen der Oberflächendekorationsverfahren gerecht zu werden, wurde ein im geöffneten Werkzeug verstellbares Angusssystem abgebildet.

Diese Konstruktion offenbart drehend und rastend öffnende und schließende Anbindungsbereiche, mit denen eine 1-fach-Anbindung für z. B. galvanisierte, lackierte und spritzblank gefertigte Verkleidungsbauteile bis hin zu einer 8-fach-Anbindung für z. B. die IML/FIM und IMD dekorierten Verkleidungsbauteile darstellbar sind.

Weiter wurde zur Abformung der auf den IMD-Trägerfolien aufgebrachten Dekoration das konventionelle Werkzeugkonzept gedreht, was bedeutet, dass die Rückseite des Bauteils abformende Kavität in die dem Plastifizieraggregat, zugewandte Werkzeughälfte eingebracht und die Sichtseite des Bauteils abformende Kavität in die dem Plastifizieraggregat abgewandte Werkzeughälfte eingelassen wurde. Unter Plastifizieraggregat ist im Sinne der vorliegenden Erfindung die Spritzeinheit der Spritzgussmaschine zu verstehen.

Zur Führung und Zentrierung der IMD-Folie über die dem Plastifizieraggregat abgewandte Werkzeughälfte ist unterstützend ein Klemmrahmen angebracht, welcher über den Maschinenauswerfer angesteuert, während des Folientransports vor gefahren wird und nach dem Folientransport die Folie dichtend gegen die Kavität drückt. Damit kann fertigungsunterstützend noch ein Vakuum unter der Folie angelegt werden.

Weiter wurden geeignete Maßnahmen in Form von Stiften, insbesondere gefederten Stiften derart in das Werkzeug integriert, dass die bedruckten und ggf. verformten und gestanzten IML-Folien aufgenommen werden können.

Um Trennungsunterschiede zwischen den einzelnen Oberflächendekorationsverfahren zu kompensieren, sind tauschbare und vorabgestimmte Abstimmplatten angebracht. Hiermit kann der Offset der IMD-Folienstärke in der Trennung der Werkzeughälften abgefangen werden.

Das Auswerfen der fertigen, dekorierten Verkleidungsbauteile erfolgt mittels eines hydraulisch angesteuerten Auswerferpaketes, welches in die dem Plastifizieraggregat zugewandte Werkzeughälfte eingebracht ist.

In dem erfindungsgemäßen formgebenden Werkzeug können alle gängigen thermoplastischen Kunststoffe wie z.B. ABS und ABS Copolymerisate, Polyolefine wie PE, PP und PS, Polyamide sowie Polyester und Polymethylmethacrylate verarbeitet werden.

## Patentansprüche

1. Formgebendes Werkzeug zur Herstellung multipler oberflächendekorierter Verkleidungsbauteile aus Kunststoff, in dem verschiedenste Oberflächentechnologien in Form von im geöffneten Werkzeugzustand dreh und rastend öffnender und schließender Anbindungsbereiche integriert sind, mit denen eine 1-fache bis hin zu einer 8-fachen Anbindung darstellbar ist, zur Herstellung multipler oberflächendekorierter Verkleidungsbauteile aus Kunststoff, wobei Kavitäteneinsätze im geöffneten und zusammengebauten Werkzeug wechselbar ausgeführt sind und thermisch vom restlichen Werkzeugaufbau entkoppelt sind, und dass die die Rückseite des Bauteils abformende Kavität in die dem Plastifizieraggregat zugewandten Werkzeughälfte eingebracht und die Sichtseite des Bauteils abformende Kavität in die dem Plastifizieraggregat abgewandte Werkzeughälfte eingelassen ist, und dass wechselbare und voreingestellte Abstimmplatten eingebracht sind, wobei das Auswerfen der fertigen dekorierten Verkleidungsbauteile mittels eines hydraulisch angesteuerten Auswerferpaketes in der dem Plastifizieraggregat zugewandten Werkzeughälfte erfolgt.

2. Formgebendes Werkzeug nach Anspruch 1, **dadurch gekennzeichnet, dass** hieraus Spritzblanke, also undekorierte, ggf. farblich gefertigte Verkleidungsbauteile fertigbar sind.

3. Formgebendes Werkzeug nach einem der vorigen Ansprüche, **dadurch gekennzeichnet, dass** zur Führung und Zentrierung der IMD-Folie über die dem Plastifizieraggregat abgewandte Werkzeughälfte ein Klemmrahmen angebracht ist, welcher über den Maschinenauswerfer angesteuert während des Folientransport vorfahrbar ist und nach Folientransport die Folie dichtend gegen die Kavität drückt.

4. Formgebendes Werkzeug nach einem der vorigen Ansprüche, **dadurch gekennzeichnet, dass** Elemente wie Stifte insbesondere gefederte Stifte derart im Werkzeug integriert sind, dass die bedruckten und / oder verformten und gestanzten IML-Folien darüber aufnehmbar sind.

## Claims

1. Shaping tool for producing multiple surface-decorated trim components from plastic, in which diverse surface technologies are integrated in the form of connecting regions opening and closing in a rotating and latching manner in the opened tool state, by means of which a single to eightfold connection is possible for the production of multiple surface-decorated trim components from plastic, wherein cavity inserts are designed to be exchangeable in the opened and assembled tool and are thermally decoupled from the remaining tool construction and the cavity moulding the back side of the component is inserted in the tool half facing the plasticising unit and the cavity moulding the visible side of the component is embedded in the tool half facing away from the plasticising unit and exchangeable and preset shims are inserted, wherein the ejection of the finished decorated trim components by means of a hydraulically controlled ejector set takes place in the tool half facing the plasticising unit.

2. Shaping tool according to claim 1, **characterised in that** uncoated, i.e. undecorated trim components, produced in colour if applicable, can be produced therefrom.

3. Shaping tool according to one of the previous claims, **characterised in that** for the guiding and centring of the IMD film via the tool half facing away from the plasticising unit, a clamping frame is arranged, which, controlled via the machine ejector, can be moved forward during the film transport and presses the film against the cavity in a sealing manner after the film transport.

4. Shaping tool according to one of the previous claims, **characterised in that** elements such as pins, particularly spring-loaded pins, are integrated in the tool in a manner that the printed and/or deformed and punched IML films are receivable via same.

## Revendications

1. Outil de façonnage permettant de produire de multiples éléments de revêtement en matière plastique décorés en surface, dans lequel sont intégrées les technologies surfaciques les plus diverses sous forme de zones de raccordement s'ouvrant et se fermant par rotation et enclenchement lorsque l'outil est ouvert, zones avec lesquelles un raccordement compris entre simple et au maximum octuple est représentable, permettant de produire de multiples éléments de revêtement en matière plastique décorés en surface, sachant que des inserts à cavités sont réalisés interchangeables dans l'outil ouvert et assemblé et qu'ils sont découplés thermiquement de la structure restante de l'outil, et que la cavité moulant le dos du composant est introduite dans la moitié de l'outil regardant le groupe de plastification et que la cavité moulant le côté visible du composant est insérée dans la moitié de l'outil ne regardant pas le groupe de plastification, et en ce que des plaques d'harmonisation interchangeables et préréglées sont introduites, sachant que l'éjection des éléments de revêtement décorés finis a lieu au moyen d'un bloc éjecteur à commande hydraulique dans la moitié de l'outil regardant le groupe de plastification.

2. Outil de façonnage selon la revendication 1, **caractérisé en ce qu'**il est possible de fabriquer à partir de lui des éléments de revêtement nus prêts à peindre, donc non décorés, le cas échéant fabriqués de couleur.

3. Outil de façonnage selon l'une des revendications précédentes, **caractérisé en ce que** pour guider et centrer la feuille IMD au-dessus de la moitié de l'outil ne regardant pas le groupe de plastification, un cadre de bridage est fixé qui, piloté via l'éjecteur de la machine, peut avancer pendant le transport de la feuille et qui après le transport de cette dernière presse la feuille avec étanchéisation contre la cavité.

4. Outil de façonnage selon l'une des revendications précédentes, **caractérisé en ce que** des éléments tels que des tiges, en particulier des tiges à ressort, sont intégrés de telle sorte dans l'outil que les feuilles IML imprimées et/ou déformés et matricées puissent être reçues au moyen d'eux.
